# EUROPÄISCHE PATENTSCHRIFT

(11) **EP 0 502 326 B1**
(45) Veröffentlichungstag und Bekanntmachung des Hinweises auf die Patenterteilung: **12.10.1994**
(21) Anmeldenummer: 92101772.9
(22) Anmeldetag: 04.02.1992
(51) Int. Cl.: B60K 15/035

(54) **Auslaufsperre als Teil einer Entlüftungsvorrichtung für Kraftstoffbehälter**
Outflow-preventing component of a fuel tank venting system
Barrière d'écoulement pour système d'aération d'un réservoir de carburant

(30) Priorität: 06.03.1991 DE 4107184
(43) Veröffentlichungstag der Anmeldung: 09.09.1992
(73) Patentinhaber: MERCEDES-BENZ AG, 70327 Stuttgart (DE)
(72) Erfinder: Scheurenbrand, Dieter, W-7448 Wolfschlugen (DE); Weymann, Peter, W-7000 Stuttgart 1 (DE); Freiwald, Wolfgang, Ing., W-7307 Aichwald 2 (DE)

(56) Entgegenhaltungen:
- DE-A- 3 121 621
- DE-A- 3 719 834
- GB-A- 258 759

## Beschreibung

Die Erfindung betrifft eine Auslaufsperre als Teil einer Entlüftungsvorrichtung für Kraftstoffbehälter, mit den Merkmalen des Oberbegriffes von Patentanspruch 1.

Eine derartige Auslaufsperre ist aus der DE-PS 37 19 834, Figuren 1 bis 9, bekannt. Sie bildet ein Gefäß, das in zwei, eine Zulauf- und eine Ablaufleitung bildende Leitungsabschnitte einer von einem Ausgleichsbehälter zur Atmosphäre weggeführten Ausgleichsleitung zwischengeschaltet ist.

Zulauf- und Ablaufleitung liegen, zueinander radial versetzt, in einer gemeinsamen horizontalen Ebene und enden jeweils im Bereich einer der Stirnwände des Gefäßes. Dessen Anordnung ist derart getroffen, daß in einer unfallbedingten Behälterseitenlage das Gefäß sich oberhalb des Kraftstoffspiegels befindet. Aus der Ablaufleitung auslaufender Kraftstoff saugt dann aus dem Gefäß Gas ab, wobei die im Gefäß vorhandene Gasmenge so bemessen ist, daß sie bis zur Unterbrechung einer innerhalb des Gefäßes auf den Kraftstoff erzeugten Heberwirkung ausreicht.

Damit konnten vom Gesetzgeber vorgeschriebene Sicherheitsbedingungen bezüglich des Ausfließens einer bestimmten Kraftstoffmenge während eines begrenzten Zeitraumes erfüllt werden.

In der Praxis hat sich allerdings gezeigt, daS bei bestimmten, jedoch höchst seltenen, extremen Fahrmanövern aus dem Kraftstoffbehälter über die Zulaufleitung unter Fliehkrafteinfluß, bei gleichzeitiger Verdichtung des Gases im Gefäß, so viel Kraftstoff in dasselbe hineingedrückt werden kann, daS im Falle einer sich unmittelbar darauf ergebenden, unfallbedingten Seitenlage des Fahrzeuges, bei der der Auslaß der Ablaufleitung unter das Kraftstoffniveau zu liegen kommt, sich beide gehäuseinneren Ausmündungen von Zulauf- und Ablaufleitung im Kraftstoff befinden und deshalb im Gefäß bei einem Kraftstoffausfluß aus der Ablaufleitung Kraftstoff nachgezogen werden und dabei der Kraftstoffbehälter auslaufen kann.

Der Erfindung liegt die Aufgabe zugrunde, eine Auslaufsperre in einer Ausbildung gemäß dem Oberbegriff des Patentanspruches 1 so zu verbessern, daß auch im Falle einer oben geschilderten Extremsituation bzw. bei einer Simulation möglicher Seiten- und Kopflagen des Kraftstoffbehälters ein kontinuierlicher Kraftstoffausfluß verhindert bzw. nur die vom Gesetzgeber tolerierte Kraftstoffmenge frei auslaufen wird.

Diese Aufgabe wird erfindungsgemäß durch die kennzeichnenden Merkmale des Patentanspruches 1 gelöst.

Das in der Einbaulage des Kraftstoffbehälters oberhalb des maximalen Kraftstoffniveaus liegende Gehäuse der erfindungsgemäßen Auslaufsperre weist eine Zulauf- und eine Ablaufkammer auf, in welche jeweils zwei in einer gemeinsamen Horizontalebene liegende Leitungen einmünden, von denen die eine eine beide Kammern miteinander verbindende Verbindungsleitung bildet.

Die kammerinneren Ausmündungen von Zulaufleitung, Verbindungsleitung und Ablaufleitung bilden dabei zwei zueinander in Reihe liegende Unterbrechungsstellen in einer durch die drei Leitungen gebildeten Entlüftungsleitung. Deren kammerinneren Leitungsabschnitte würden ohne die Unterbrechungsstellen in einer der möglichen Seitenlagen des Kraftstoffbehälters gebildeten Heberleitung bilden, aus der sich ein kontinuierlicher Kraftstoffausfluß einstellen würde, sobald die Kraftstoffsäule in der Ablaufleitung absinken bzw. aus dieser Kraftstoff austreten würde.

Die in der Ablaufkammer vorhandene Unterbrechungsstelle gewährleistet dabei, daß bei Kippen des Kraftstoffbehälters in die oben angesprochene Seitenlage durch aus der Ablaufleitung abfließenden Kraftstoff ein normalerweise in der Zulaufkammer zustande kommender Hebereffekt in der Ablaufkammer wieder unterbrochen und somit ein kontinuierlicher Kraftstoffausfluß zuverlässig verhindert wird.

Vorteilhafte Ausgestaltungen der Erfindung sind Gegenstand von Unteransprüchen.

In der Zeichnung ist ein Ausführungsbeispiel einer erfindungsgemäßen Auslaufsperre als Teil der einem Kraftstoffbehälter zugeordneten Entlüftungsvorrichtung dargestellt. Es zeigen:
- Figur 1: den Kraftstoffbehälter in seiner Einbaulage,
- Figur 1a: einen Schnitt entlang der Linie Ia-Ia der Figur 1, in größerem Maßstab,
- Figur 2: den Kraftstoffbehälter in einer nach rechts gekippten Seitenlage,
- Figur 3: den Kraftstoffbehälter in Kopflage,
- Figur 4: den Kraftstoffbehälter in einer Seitenlage nach einer 270° Rechtsdrehung (Rollover).

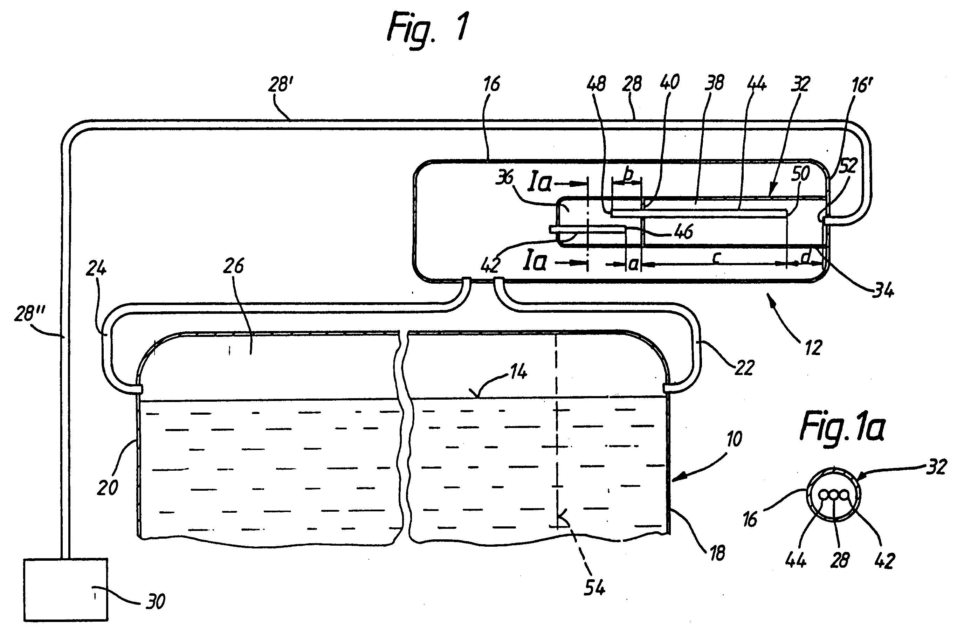

Figur 1 zeigt einen als Ganzes mit 10 bezeichneten Kraftstoffbehälter eines Kraftfahrzeuges, der sich in seiner Einbaulage quer zu einer sich senkrecht auf der Zeichenebene stehenden Fahrzeuglängsachse erstreckt.

Beim gezeigten Ausführungsbeispiel ist als Ganzes mit 12 eine Entlüftungsvorrichtung bezeichnet, die außerhalb und oberhalb des Kraftstoffbehälters 10 vorgesehen ist. Sie könnte auch behälterintern oberhalb des maximalen Kraftstoffniveaus 14 angeordnet sein. Sie weist einen länglichen, sich in Fahrzeugquerrichtung erstreckenden, rohrartigen Ausgleichsbehälter 16 auf, der über an jeweils einer Seitenwand 18 bzw. 20 des Kraftstoffbehälters 10 angeschlossene Verbindungsleitungen 22 und 24 mit dem sich oberhalb des maximalen Kraftstoffniveaus befindenden und mit einem Gasgemisch gefüllten Teil 26 des Behälterraumes verbunden ist. Eine im folgenden als Ablaufleitung bezeichnete Entlüftungsleitung 28 ist vom Ausgleichsbehälter 16 vorzugsweise zu einem Aktivkohlefilter 30 weggeführt.

Die Ablaufleitung 28 ist gemäß Figur 1 am rechten Stirnende des Ausgleichsbehälters 16 angeschlossen, verläuft mit einem Leitungsabschnitt 28' oberhalb des Ausgleichsbehälters 16 horizontal in Fahrzeugquerrichtung und anschließend in seitlichem Abstand zur Seitenwand 20 des Kraftstoffbehälters 10 mit einem Leitungsabschnitt 28'' nach unten zum Aktivkohlefilter 30.

Innerhalb des Ausgleichsbehälters 16 ist eine als Ganzes mit 32 bezeichnete Auslaufsperre angeordnet, die sicherstellt, daß nach einer Drehbewegung des Kraftstoffbehälters 10 von insgesamt 270° um eine zur Fahrzeuglängsrichtung liegende Achse (Rollover), beispielsweise im Uhrzeigersinn, über die Ablaufleitung 28 nur eine gesetzlich festgelegte Höchstmenge an Kraftstoff aus dem Kraftstoffbehälter 10 bzw. dem Ausgleichsbehälter 16 auslaufen wird.

Die Auslaufsperre 32 weist ein längliches, beispielsweise zylindrisches Gehäuse 34 auf, das sich von der gemäß Figur 1 rechten Stirnwand 16' des Ausgleichsbehälters 16 in diesen hineinerstreckt. Alternativ hierzu könnte es in dieser Weise der Stirnwand 16' auch extern zugeordnet sein. Anstelle der koaxialen Zuordnung zum Ausgleichsbehälter 16 kann die Auslaufsperre 32 in diesem auch höherliegend vorgesehen sein.

Der Gehäuseraum ist in Zwei hintereinander liegende, vorzugsweise gleichen Querschnitt aufweisende Kammern, nämlich in eine Zulaufkammer 36 und eine Ablaufkammer 38 unterteilt, die durch eine Zwischenwand 40 voneinander getrennt sind.

Das Volumen der Ablaufkammer 38 entspricht vorzugsweise wenigstens dem doppelten Volumen der Ablaufleitung 28, während das Volumen der Zulaufkammer 36 lediglich einem Bruchteil dieses Volumens, vorzugsweise weniger als die Hälfte hiervon entspricht.

In die Zulaufkammer 36 mündet eine Zulaufleitung 42 ein, während beide Kammern 36 und 38 über eine die Zwischenwand 40 durchsetzende Verbindungsleitung 44 miteinander kommunizieren.

Der Abstand a der kammerinneren Mündungsöffnung 46 der Zulaufleitung 42 von der Zwischenwand 40 ist dabei geringer als der Abstand b der sich in der Zulaufkammer 36 befindenden Mündungsöffnung 48 von der Zwischenwand 40.

Die Axialerstreckung b der Verbindungsleitung 44 von der Zwischenwand 40 in die Zulaufkammer 36 ist dabei kleiner als die dem halben Volumen entsprechende Axialerstreckung der Zulaufkammer 36.

Die Verbindungsleitung 44 erstreckt sich axial in die Ablaufkammer 38 hinein, wobei deren ablaufkammerseitige Mündungsöffnung 50, ausgehend von der Zwischenwand 40, einen Abstand c hat, der größer ist als die dem halben Kammervolumen entsprechende Axialerstreckung der Ablaufkammer 38. Dabei ist die ablaufkammerseitige Mündungsöffnung 50 in axialer Erstreckungsrichtung der Verbindungsleitung 44 in einem Abstand d von der ablaufkammerseitigen Mündungsöffnung 52 der Ablaufleitung 28 vorgesehen.

Zum besseren Verständnis der gegenseitigen Zuordnung der Mündungsöffnungen 46 und 48 von Zulaufleitung 40 und Verbindungsleitung 44 in der Zulaufkammer 36 sowie der Mündungsöffnungen 50 und 52 von Verbindungsleitung 44 und Ablaufleitung 28 sind diese Leitungen 40, 44 und 28 in der Einbaulage in Figur 1 in unterschiedlichen Horizontalebenen eingezeichnet, während diese in Wirklichkeit, wie aus Figur 1a ersichtlich ist, in der Einbaulage geodätisch auf gleichem horizontalem Niveau zu liegen haben.

Außerdem ist die Zuordnung der Auslaufsperre 32 zum Kraftstoffbehälter 10 derart zu treffen, daß sich die Mündungsöffnung 46 der Zulaufleitung 40 außer in der Einbaulage auch in einer der möglichen Seitenlagen des Kraftstoffbehälters 10 oberhalb des sich hierbei einstellenden Kraftstoffniveaus 54 befindet.

Die Auslaufsperre 32 arbeitet folgendermaßen:
Es sei angenommen, daß mögliche Seitenlagen sowie die Kopflage des Kraftstoffbehälters 10 entsprechend geltender Prüfvorschriften in einer Einrichtung simuliert werden.

Dabei wird eine Folge von Prüflagen für einen sogenannten Rollover gewählt, während welcher die Auslaufsperre 32, im Hinblick auf ihre spezielle Anordnung am Kraftstoffbehälter 10, nacheinander bei Rechtsdrehung des Kraftstoffbehälters 10 in drei jeweils um 90° voneinander abweichende Prüflagen verbracht wird.

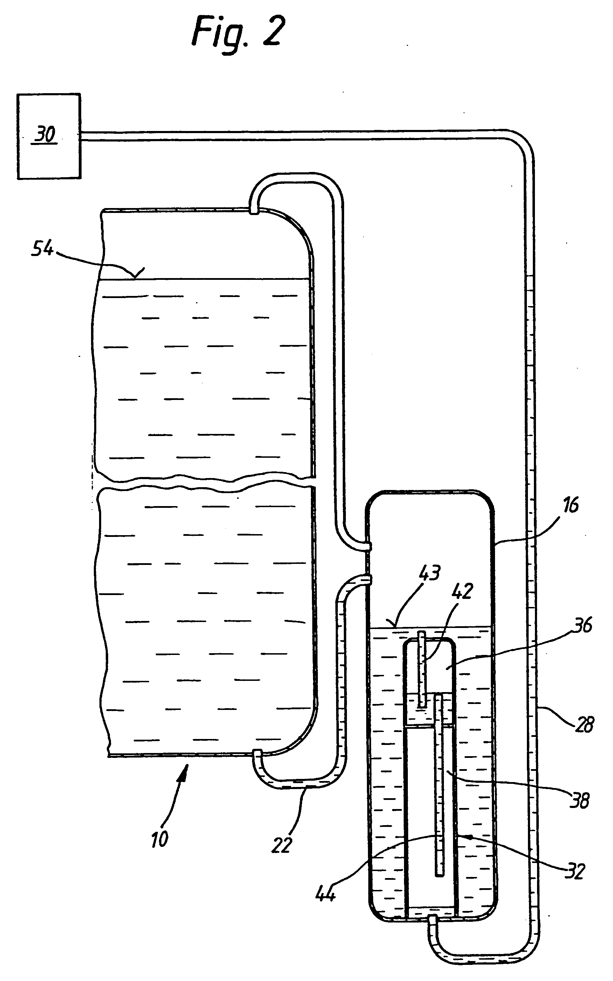

Nimmt der Kraftstoffbehälter 10 eine erste Prüflage (Seitenlage gemäß Figur 2) ein, fließt über die Verbindungsleitung 22 Kraftstoff in den Ausgleichbehälter 10, in welchem sich ein Kraftstoffniveau 43 einstellen wird. Aus dem Ausgleichsbehälter 16 fließt über die Zulaufleitung 42 Kraftstoff in die Zulaufkammer 36, von dort über das Verbindungsrohr 44 in die Ablaufkammer 38 und aus dieser schließlich in die Ablaufleitung 28.

In dieser steigt der Kraftstoff bis in Höhe des sich im Kraftstoffbehälter 10 einstellenden Kraftstoffniveaus 54. Damit kann Kraftstoff aus der Ablaufleitung 28 nicht entweichen.

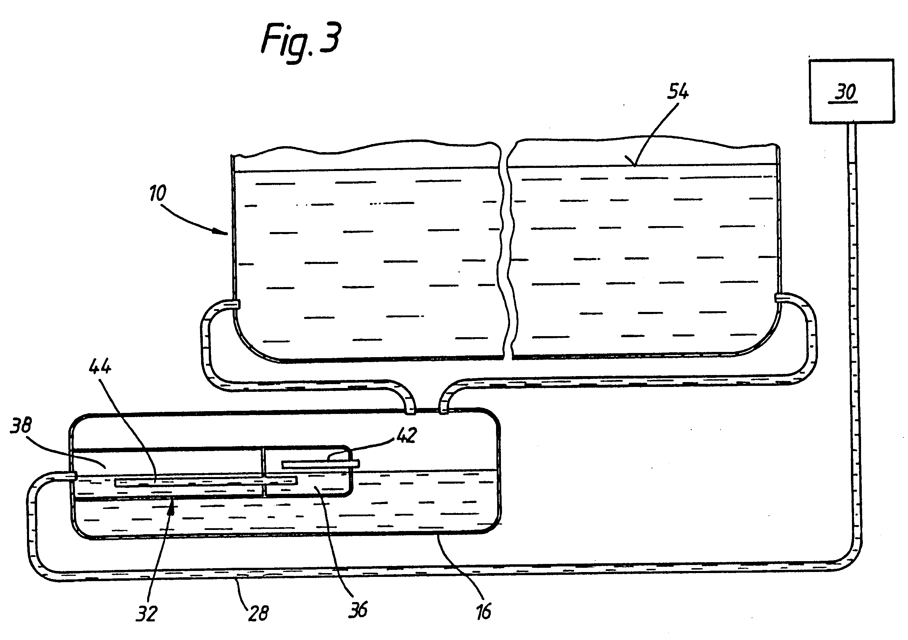

In der Kopflage des Kraftstoffbehälters 10 gemäß Figur 3 füllen sich Ausgleichsbehälter 16, sowie Zulaufkammer 36 und Ablaufkammer 38 der Auslaufsperre 32 über die auf gleichem geodätischen Niveau (Figur 1a) mit der Achse des Ausgleichsbehälters 16 liegenden Zulauf- und Verbindungsleitungen 42, 44 mit Kraftstoff, der zugleich auch die Ablaufleitung 28 bis in Höhe des sich im Kraftstoffbehälter 10 einstellenden Kraftstoffniveaus 54 füllen wird. Ein Austritt von Kraftstoff aus der Ablaufleitung 28 findet somit ebenfalls nicht statt.

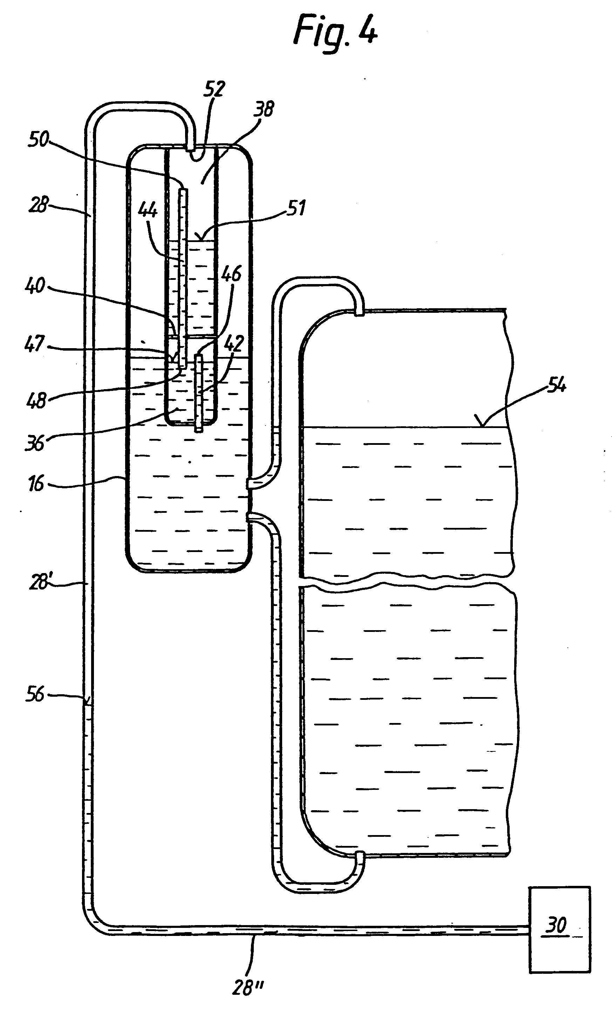

In der in Figur 4 gezeigten 270°-Seitenlage (Rollover) befindet sich die Mündungsöffnung 48 der Verbindungsleitung 44 unterhalb des Kraftstoffniveaus 47 in der Zulaufkammer 36, während sich die in dieser befindende Mündungsöffnung 46 der Zulaufleitung 42 oberhalb des Kraftstoffniveaus 47 befindet. Die in der Ablaufkammer 38 vorhandene Mündungsöffnung 50 der Verbindungsleitung 44 befindet sich oberhalb des kammerinneren Kraftstoffniveaus 51.

Analog zur Einbaulage befindet sich in dieser Prüflage das Ende der Ablaufleitung 28 bzw. der Aktivkohlefilter 30 wieder in einer Ebene unterhalb des Kraftstoffniveaus 54.

Der in den beiden vorhergehenden Prüflagen in die Ablaufleitung 28 eingeflossene Kraftstoff fließt dabei in der Ablaufleitung 28 unter Schwerkrafteinfluß nach unten, wobei in der Ablaufkammer 38 ein Unterdruck erzeugt wird und aus dieser vom vorhandenen Gasvolumen Gas in die Ablaufleitung 28 abgesaugt wird. Zugleich füllt sich die Ablaufkammer 38 mit über die Verbindungsleitung 44 aus der Zulaufkammer 36 abgesaugtem Kraftstoff an, was außerdem ein Zufluß von Kraftstoff über die Zulaufleitung 42 aus dem Ausgleichsbehälter 16 in die Zulaufkammer 36 zur Folge hat.

Die Kraftstoffsäule im Leitungsabschnitt 28' der Ablaufleitung 28 wird dabei solange absinken, bis die Größe des durch sie erzeugten Flüssigkeitsdruckes der Größe des in der Ablaufkammer 38 herrschenden Unterdruckes entspricht.

Die Volumina von Ablaufkammer 38 und Ablaufleitung 28 sind dabei derart aufeinander abgestimmt, daß bei Erreichen eines Gleichgewichts zwischen hydrostatischem Druck und Unterdruck die Kraftstoffsäule noch im Leitungsabschnitt 28' bei 56 zum Stehen kommt und dabei der Flüssigkeitsspiegel 51 in der Ablaufkammer 38 noch unterhalb der Mündungsöffnung 50 der Verbindungsleitung verbleibt.

Wäre in der Ablaufkammer 38 die durch den Abstand d zwischen der Mündungsöffnung 50 der Verbindungsleitung und der Mündungsöffnung 52 der Ablaufleitung 28 gegebene Unterbrechungsstelle nicht vorhanden, würde sich in dieser Prüflage der Kraftstoffbehälter 10 völlig entleeren.

Die Auslaufsperre 32 einschließlich der Zulauf- und der Verbindungsleitungen 42 und 44 können einstückig aus einem Formteil aus Kunststoff gespritzt sein. Dabei können beide Leitungen außerhalb des Gehäuses der Auslaufsperre 32 angespritzt sein.

Einen besonderen Vorteil bietet die Erfindung für den Fall, daß in den Kraftstoffbehälter beispielsweise für eine Durchführung langer Gegenstände, wie Ski, aus dem Kofferraum in den Fondraum, von oben her eine entsprechende Vertiefung eingeformt ist.

In diesem Falle besteht dann die Notwendigkeit, die Entlüftungsvorrichtung auf einer Seite des Kraftstoffbehälters unterbringen zu müssen.

Die erfindungsgemäße Auslaufsperre ermöglicht aufgrund ihrer gedrungenen Auslegung eine derartige Anordnung.

## Patentansprüche

1. Auslaufsperre als Teil einer Entlüftungsvorrichtung (12) für Kraftstoffbehälter (10), mit einem Gehäuse (34), an dem sowohl eine mit dem Behälterinneren verbundene Zulaufleitung (42) als auch eine mit der Atmosphäre verbundene Ablaufleitung (28) angeschlossen sind, wobei die Zulaufleitung in ein Volumen eines Gehäuseraumes mündet und deren rauminnere, sich in der Einbaulage sowie in einer Seitenlage des Kraftstoffbehälters oberhalb des maximalen Kraftstoffniveaus (14) befindende Ausmündung auf einer Axialerstreckung des Gehäuseraumes liegt, die größer ist als die dem halben Volumen entsprechende Axialerstreckung und wobei in der horizontalen Gehäuseausgangslage Zulauf- und Ablaufleitung auf gleichem horizontalem Niveau liegen,
**dadurch gekennzeichnet,**
daß der Gehäuseraum in eine Zulauf- und eine Ablaufkammer (36, 38) unterteilt ist, die über eine Verbindungsleitung (44) miteinander verbunden sind, daß der Abstand der kammerinneren Mündungsöffnung (46) der Zulaufleitung (42) von einer die beiden Kammern (36, 38) voneinander trennenden Zwischenwand (40) kleiner ist als der Abstand der sich in der Zulaufkammer (36) befindenden Mündungsöffnung (48) der Verbindungsleitung (44) von der Zwischenwand (40)
daß die Verbindungsleitung (44) in einer Axialerstreckung in der Zulaufkammer (36) mündet, die, ausgehend von der zulaufseitigen Seite der Zwischenwand (40), kleiner ist als die dem halben Volumen entsprechende Kammeraxialerstreckung,
daß die Ablaufleitung (28) in die Ablaufkammer (38) im Bereich ihrer der Zwischenwandm (40) gegenüberliegenden Stirnwand einmündet und der Abstand der ablaufkammerseitigen Mündung (50) der Verbindungsleitung (44),betrachtet von der Zwischenwand (40), in Axialrichtung eine Erstreckung aufweist, die größer ist als die dem halben Volumen entsprechende Axialerstreckung der Ablaufkammer (38) und daß die ablaufseitige Mündung (50) der Verbindungsleitung (44) und die kammerinnere Mündung (52) der Ablaufleitung (28) in axialer Erstreckungsrichtung einen Abstand (d) aufweisen.

2. Auslaufsperre nach Anspruch 1,
**dadurch gekennzeichnet,**
daß das Volumen der Ablaufkammer (38) wenigstens dem doppelten Volumen der Ablaufleitung (28) entspricht.

3. Auslaufsperre nach Anspruch 1 oder 2,
**dadurch gekennzeichnet,**
daß sie in einen Ausgleichsbehälter (16) integriert ist.

4. Auslaufsperre nach einem der vorhergehenden Ansprüche,
**dadurch gekennzeichnet,**
daß sie als Formteil aus Kunststoff hergestellt ist.

## Claims

1. Fuel lock as part of a venting arrangement (12) for fuel tanks (10), having a casing (34) to which are connected both an inlet conduit (42) connected to the inside of the tank and an outlet conduit (28) connected to the atmosphere, in which the inlet conduit emerges into a volume of a casing space and its mouthpiece within the space is located on an axial extent of the casing space which is above the maximum fuel level (14) in the installation attitude and also when the fuel tank is on its side, the axial extent of the casing space being greater than the axial extent corresponding to half its volume and the inlet conduit and the outlet conduit being located on the same horizontal level in the initial horizontal casing attitude, characterised in that the casing space is subdivided into an inlet chamber (36) and an outlet chamber (38) which are connected together by means of a connecting conduit (44), in that the distance between the inlet conduit (42) mouthpiece opening (46) within the chamber and a partition (40) separating the two chambers (36, 38) from one another is smaller than the distance between the partition (40) and the connecting conduit (44) mouthpiece opening (48) in the inlet chamber (36), in that the connecting conduit (44) emerges in an axial extent in the inlet chamber (36) which, starting from the inlet side of the partition (40), is smaller than the chamber axial extent corresponding to half its volume, in that the outlet conduit (28) enters the outlet chamber (38) in the region of its end wall opposite to the partition (40) and the distance of the outlet chamber end mouthpiece (50) of the connecting conduit (44), observed from the partition (40), has an extent in the axial direction which is larger than the axial extent of the outlet chamber (38) corresponding to half its volume and in that the outlet end mouthpiece (50) of the connecting conduit (44) and the outlet conduit (28) mouthpiece (52) within the chamber have a distance apart (d) in the direction of axial extent.

2. Fuel lock according to Claim 1, characterised in that the volume of the outlet chamber (38) corresponds to at least twice the volume of the outlet conduit (28).

3. Fuel lock according to Claim 1 or 2, characterised in that it is integrated in a surge tank (16).

4. Fuel lock according to one of the preceding claims, characterised in that it is manufactured as a plastic preform.

## Revendications

1. Barrière d'écoulement faisant partie d'un dispositif d'aération (12) pour réservoir de carburant (10) comportant un carter (34) auquel sont raccordés d'une part un conduit d'entrée (42) relié à l'intérieur du réservoir et d'autre part un conduit de sortie (28) relié à l'atmosphère, le conduit d'entrée débouchant dans un volume d'une cavité du carter et son embouchure, située à l'intérieur de la cavité et se trouvant dans la disposition de montage et également dans une disposition latérale du réservoir de carburant au dessus du niveau maximal de carburant (14), est placée dans la cavité de carter à une distance axiale qui est plus grande que la distance axiale correspondant à la moitié du volume, tandis que dans la disposition initiale horizontale du carter, le conduit d'entrée et le conduit de sortie sont situés à un même niveau horizontal, barrière caractérisée en ce que la cavité de carter est divisée en une chambre d'entrée (36) et une chambre de sortie (38), qui sont reliées l'une avec l'autre par l'intermédiaire d'un conduit de liaison (44), en ce que l'espacement entre l'orifice d'embouchure (46), intérieure à la chambre, du conduit d'entrée (42) et une paroi intermédiaire (40), séparant les deux chambres (36, 38) l'une de l'autre, est plus petit que l'espacement entre l'orifice d'embouchure (48), situé dans la chambre d'entrée (36), du conduit de liaison (44) et la paroi intermédiaire (40), en ce que le conduit de liaison (44) débouche dans la chambre d'entrée (36) à une distance axiale qui, à partir du côté de la paroi intermédiaire (40) qui est dirigé vers l'entrée, est plus petit que la distance axiale de chambre correspondant à la moitié du volume, en ce que le conduit de sortie (28) débouche dans la chambre de sortie (38) dans une zone de sa paroi frontale située en regard de la paroi intermédiaire (40) et l'espacement entre l'embouchure (40), située du côté de la chambre de sortie, du conduit de liaison (44), considérée à partir de la paroi intermédiaire (40), comporte dans une direction axiale une dimension qui est plus grande que la dimension axiale, correspondant à la moitié du volume, de la chambre de sortie (38) et en ce que l'embouchure (50), située du côté de sortie, du conduit de liaison (44) et l'embouchure (52), située à l'intérieur de la chambre, du conduit de sortie (28) sont espacées d'une distance (d) dans une direction axiale.

2. Barrière d'écoulement selon la revendication 1, caractérisée en ce que le volume de la chambre de sortie (38) correspond au moins au double du volume du conduit de sortie (28).

3. Barrière d'écoulement selon la revendication 1 ou 2, caractérisée en ce qu'elle est intégrée dans un récipient d'équilibrage (16).

4. Barrière d'écoulement selon une des revendications précédentes, caractérisée en ce qu'elle est réalisée comme une pièce profilée en plastique.
